(19) Europäisches Patentamt

European Patent Office

Office européen des brevets

(11) **EP 4 488 021 A1**

(12) **EUROPEAN PATENT APPLICATION**
published in accordance with Art. 153(4) EPC

(43) Date of publication:
08.01.2025 Bulletin 2025/02

(21) Application number: 22929881.5

(22) Date of filing: 04.03.2022

(51) International Patent Classification (IPC):
*B29B 11/16* (2006.01)    *B29B 15/08* (2006.01)
*B32B 5/06* (2006.01)    *B32B 5/26* (2006.01)
*B29C 70/10* (2006.01)

(52) Cooperative Patent Classification (CPC):
B29B 11/16; B29C 70/10; B32B 5/06; B32B 5/26

(86) International application number:
PCT/JP2022/009552

(87) International publication number:
WO 2023/166737 (07.09.2023 Gazette 2023/36)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: MITSUBISHI ELECTRIC
CORPORATION
Chiyoda-ku
Tokyo 100-8310 (JP)

(72) Inventor: TAKAHASHI, Ichiya
Tokyo 100-8310 (JP)

(74) Representative: Pfrang, Tilman
Meissner Bolte
Patentanwälte Rechtsanwälte
Partnerschaft mbB
Postfach 86 06 24
81633 München (DE)

(54) **FIBER PREFORM, FIBER PREFORM PRECURSOR, AND METHOD FOR MANUFACTURING FIBER PREFORM**

(57) A fiber preform (12) includes first fiber tows located in a first area on a base, a second fiber tow located in a second area on the base other than the first area and stitched onto the base with a water-insoluble fixing thread, and a fixer located across the first fiber tows to fix parts of the first fiber tows to the base. The fixer is a third fiber tow stitched onto the base with a water-insoluble fixing thread, or the fixer is a glue or an elastic adhesive. The first fiber tows are displaceable relative to one another. The first area is displaceable relative to the second area.

FIG.1

EP 4 488 021 A1

**Description**

Technical Field

The present disclosure relates to a fiber preform for fiber reinforced plastics, a fiber preform precursor for the fiber preform, and a method for manufacturing the fiber preform.

Background Art

A sandwich structure including a fiber reinforced plastic layer as an outer layer is used for, for example, an end bell for a power generator. An example of a fiber preform as a protruding outer layer may be a fiber fabric or a fiber preform formed by tailored fiber placement (hereafter, TFP).
With TFP, a fiber tow is stitched onto a base with fixing threads to be integral with the base for manufacturing a fiber preform, as described in Patent Literature 1.

Citation List

Patent Literature

Patent Literature 1: Unexamined Japanese Patent Application Publication No. 2014-100911

Summary of Invention

Technical Problem

The fiber preform with the fiber tow stitched onto the base with fixing threads is formed in a mold. When the fiber preform to be formed in the mold has a curved profile, the fiber tow may be longer or shorter than the mold. With the fiber tow longer or shorter than the mold, the fiber preform may wrinkle. Known fiber preforms thus have low formability.
Under such circumstances, an objective of the present disclosure is to provide a fiber preform with high formability, a fiber preform precursor for the fiber preform, and a method for manufacturing the fiber preform.

Solution to Problem

A fiber preform according to an aspect of the present disclosure includes first fiber tows located in a first area on a base, a second fiber tow located in a second area on the base other than the first area and stitched onto the base with a water-insoluble fixing thread, and a fixer located across the first fiber tows to fix parts of the first fiber tows to the base. The fixer is a third fiber tow stitched onto the base with a water-insoluble fixing thread, or the fixer is a glue or an elastic adhesive. The first fiber tows are displaceable relative to one another. The first area is displaceable relative to the second area.

Advantageous Effects of Invention

In the above aspect of the present disclosure, the parts of the fiber tows in the first area remain unseparated from the base and fixed to allow displacement of the fiber tows relative to one another. The first fiber tows are thus displaceable relative to one another, and the first area is displaceable relative to the second area. The fiber preform in the above aspect, a fiber preform precursor for the fiber preform, and a method for manufacturing the fiber preform have higher formability.

Brief Description of Drawings

FIG. 1 is a schematic diagram of a fiber preform precursor according to Embodiment 1;
FIG. 2A is an enlarged partial view of area P1 in FIG. 1;
FIG. 2B is an enlarged partial view of area P2 in FIG. 1;
FIG. 2C is an enlarged partial view of area P3 in FIG. 1;
FIG. 2D is a cross-sectional view taken along line IID-IID in FIG. 2C;
FIG. 3 is a schematic cross-sectional view of outer slits illustrated in FIG. 1;
FIG. 4 is a diagram of the fiber preform precursor according to Embodiment 1 with the dimensions;
FIG. 5A is an enlarged partial view of area Q1 in FIG. 4;

FIG. 5B is an enlarged partial view of area Q2 in FIG. 4;

FIG. 6A is an enlarged partial view of area Q3 in FIG. 4;

FIG. 6B is an enlarged partial view of area Q4 in FIG. 4;

FIG. 7 is a diagram of a fiber preform after forming using the fiber preform precursor according to Embodiment 1 illustrating the dimensions;

FIG. 8A is a diagram of the outer slits in Embodiment 1 illustrating the arrangement;

FIG. 8B is a diagram of inner slits in Embodiment 1 illustrating the arrangement;

FIG. 9A is a diagram of a fixer on an outer taper portion in Embodiment 1 illustrating the arrangement;

FIG. 9B is a diagram of the fixer on an inner taper portion in Embodiment 1 illustrating the arrangement;

FIG. 10 is a schematic diagram illustrating a method for forming a fiber preform manufactured using the fiber preform precursor according to Embodiment 1;

FIG. 11 is a schematic diagram of a fiber preform according to Embodiment 2;

FIG. 12A is an enlarged partial view of area S1 in FIG. 11;

FIG. 12B is an enlarged partial view of area S2 in FIG. 11;

FIG. 12C is an enlarged partial view of area S3 in FIG. 11;

FIG. 13 is a schematic diagram of a fiber preform precursor according to Embodiment 3;

FIG. 14A is an enlarged partial view of area T1 in FIG. 13;

FIG. 14B is an enlarged partial view of area T2 in FIG. 13;

FIG. 14C is an enlarged partial view of area T3 in FIG. 13;

FIG. 15 is a cross-sectional view taken along line XV-XV in FIG. 14C;

FIG. 16A is a diagram of a fixer on an outer taper portion in Embodiment 3 illustrating the arrangement;

FIG. 16B is a diagram of the fixer on an inner taper portion in Embodiment 3 illustrating the arrangement;

FIG. 17 is a schematic diagram of a fiber preform according to Embodiment 4;

FIG. 18A is an enlarged partial view of area U1 in FIG. 17;

FIG. 18B is an enlarged partial view of area U2 in FIG. 17;

FIG. 18C is an enlarged partial view of area U3 in FIG. 17;

FIG. 19 is a schematic diagram illustrating a method for manufacturing a fiber preform precursor and a fiber preform according to Embodiment 5;

FIG. 20 is a schematic diagram illustrating the method for manufacturing the fiber preform precursor and the fiber preform according to Embodiment 5;

FIG. 21 is a schematic diagram illustrating the method for manufacturing the fiber preform precursor and the fiber preform according to Embodiment 5;

FIG. 22 is a schematic diagram illustrating the method for manufacturing the fiber preform precursor and the fiber preform according to Embodiment 5;

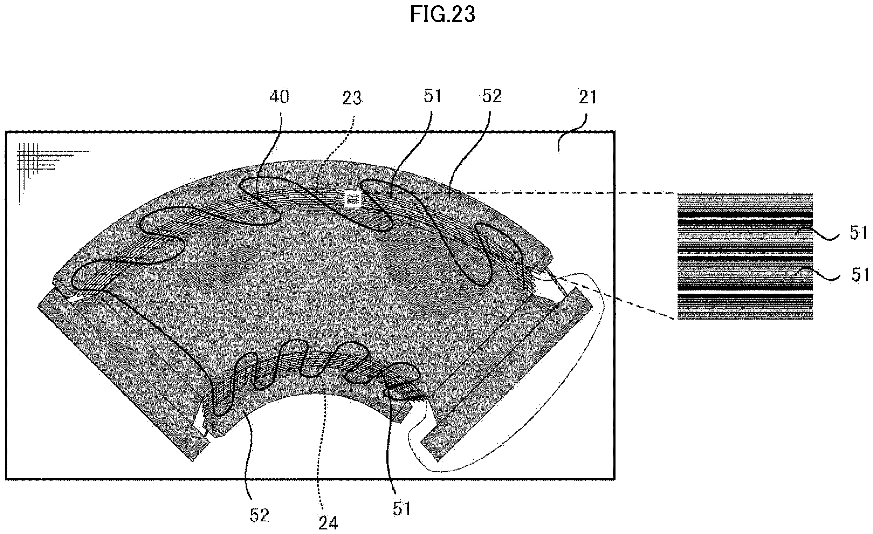

FIG. 23 is a schematic diagram illustrating the method for manufacturing the fiber preform precursor and the fiber preform according to Embodiment 5;

FIG. 24 is a schematic diagram illustrating a method for manufacturing a fiber preform precursor and a fiber preform according to Embodiment 6; and

FIG. 25 is a schematic diagram illustrating a method for manufacturing a sandwich panel in an embodiment of the present disclosure.

Description of Embodiments

A fiber preform, a fiber preform precursor, and a method for manufacturing the fiber preform and the fiber preform precursor according to one or more embodiments of the present disclosure are described in detail below with reference to the drawings. Same reference signs denote same or corresponding components in the drawings.

Embodiment 1

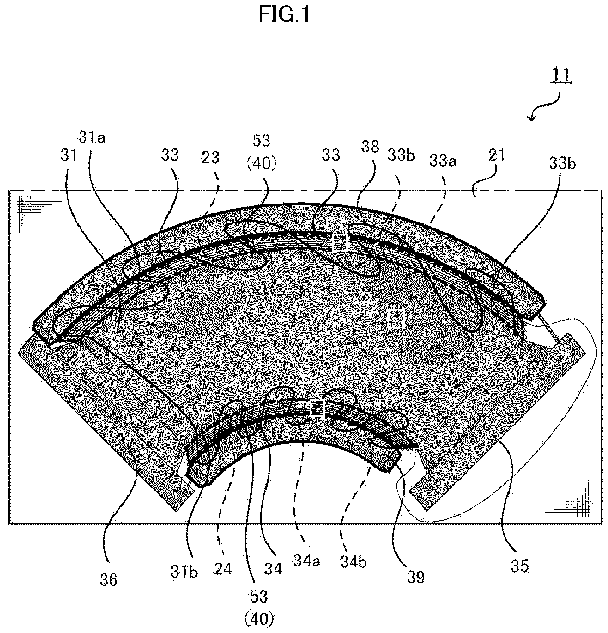

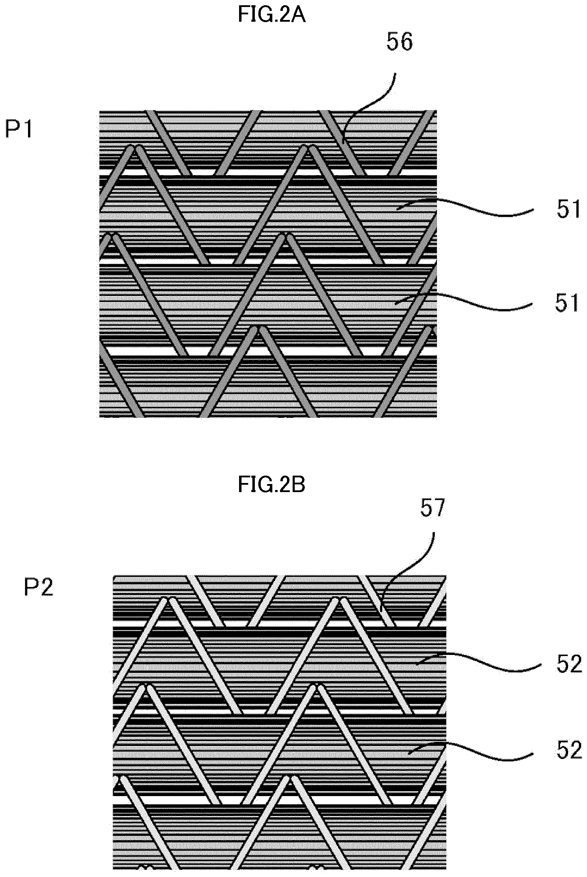

FIG. 1 is a schematic diagram of a fiber preform precursor 11 according to Embodiment 1. FIGS. 2A to 2C are enlarged views of areas P1 to P3 in FIG. 1. The fiber preform precursor 11 is manufactured during manufacture of a fiber preform 12 according to Embodiment 2. The fiber preform 12 manufactured using the fiber preform precursor 11 is used as a protruding outer layer of a sandwich panel being a partial disk with a central angle of 90°. The fiber preform precursor 11 or the fiber preform 12 is flat and is formed into a protruding shape. The partial-disk sandwich panel is used as, for example, an end bell for a power generator. The sandwich panel may have a different degree of the central angle or a different shape from the example described in the embodiment.

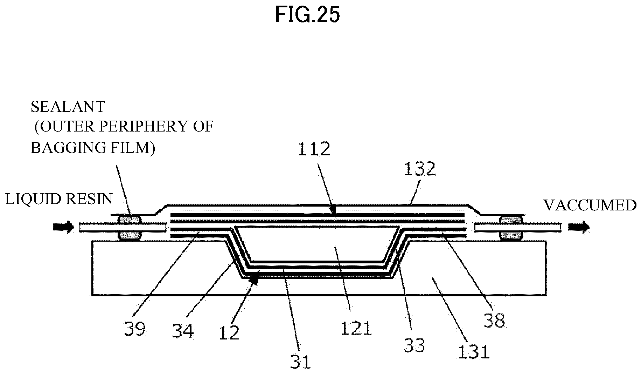

The sandwich panel is manufactured, for example, in the manner described below. As illustrated in FIG. 25, a fiber preform 12 for a protruding outer layer is placed on a female mold 131. A foam core 121 and a fiber preform 112 for a smooth outer layer are placed on the fiber preform 12 to hold the foam core 121 between the fiber preforms 12 and 112. The foam core 121 between the fiber preforms 12 and 112 and the mold 131 are then covered with a bagging film 132. A liquid resin is injected into spaces between the mold 131 and the bagging film 132. The liquid resin cures to complete the sandwich panel.

As illustrated in FIG. 1, the fiber preform precursor 11 includes a base 21 including a fiber fabric, a center portion 31 including fiber tows and water-insoluble fixing threads, an outer taper portion 33 including fiber tows and water-soluble fixing threads, an inner taper portion 34 including fiber tows and water-soluble fixing threads, side portions 35 and 36 each including fiber tows and water-insoluble fixing threads, an outer flange portion 38 including fiber tows and water-insoluble fixing threads, and an inner flange portion 39 including fiber tows and water-insoluble fixing threads.

The center portion 31, the outer taper portion 33, the inner taper portion 34, the outer flange portion 38, and the inner flange portion 39 each have the shape of a part cut from a ring. The outer taper portion 33 extends along an outer periphery 31a of the center portion 31, and the outer flange portion 38 extends along the outer periphery of the outer taper portion 33. The inner taper portion 34 extends along an inner periphery 3 1b of the center portion 31, and an inner flange portion 39 extends along the inner periphery of the inner taper portion 34. The side portions 35 and 36 are located at both ends of the center portion 31. When the sandwich panel is completed, as illustrated in FIG. 25, the center portion 31 is located on a protruding flat portion of the foam core, the outer taper portion 33 is located on an outer slope of the foam core, the inner taper portion 34 is located on an inner slope of the foam core, the outer flange portion 38 is located as an outer flange, and the inner flange portion 39 is located as an inner flange.

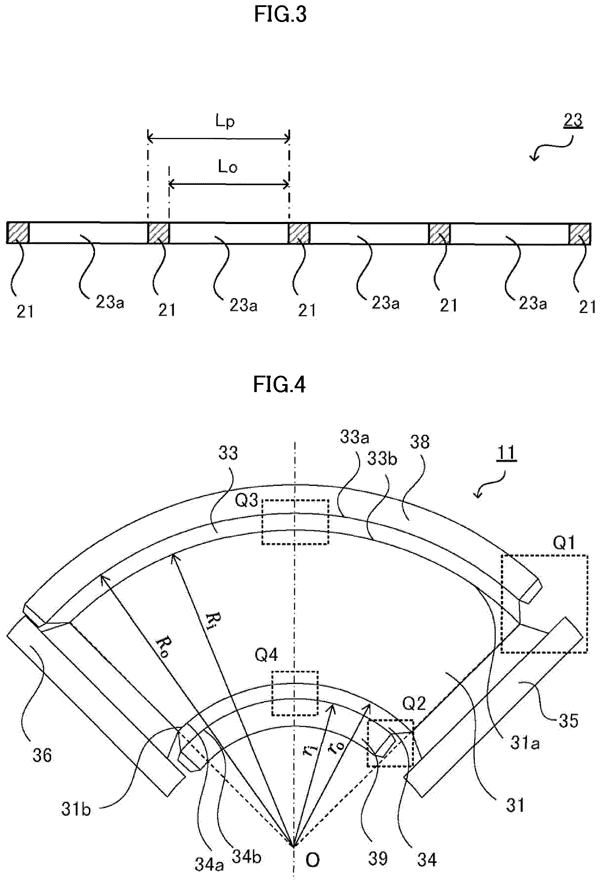

FIG. 4 illustrates the fiber preform precursor 11 with the dimensions. As illustrated in FIG. 4, an outer periphery 33a of the outer taper portion 33 is an arc centered on a point O with an outer diameter $R_o$. An inner periphery 33b of the outer taper portion 33 is an arc centered on the point O with an inner diameter $R_i$. An outer periphery 34a of the inner taper portion 34 is an arc centered on the point O with an outer diameter $r_o$. An inner periphery 34b of the inner taper portion 34 is an arc centered on the point O with an inner diameter $r_i$.

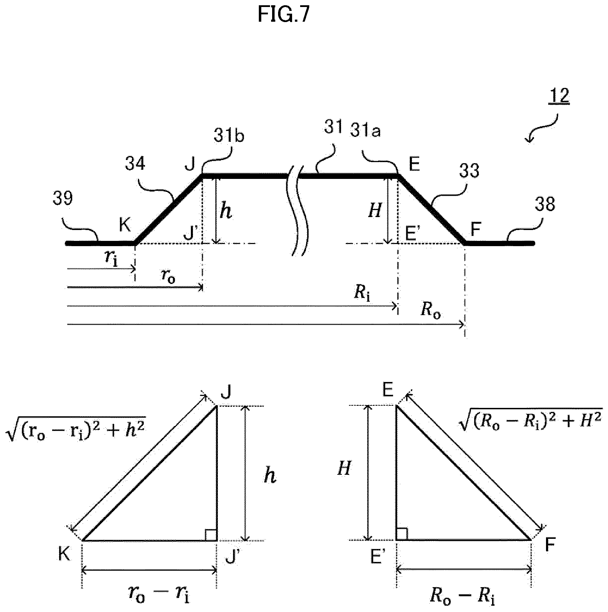

The dimensions of the center portion 31, the outer taper portion 33, and the inner taper portion 34 after the fiber preform 12 is formed are described. As illustrated in FIG. 7, the height of the outer periphery 31a of the center portion 31 is denoted with H, and the height of the inner periphery 3 1b of the center portion 31 after forming is denoted with h. In the present embodiment, the center portion 31 has a constant height on the inner and outer peripheries. The heights H and h are thus equal to each other.

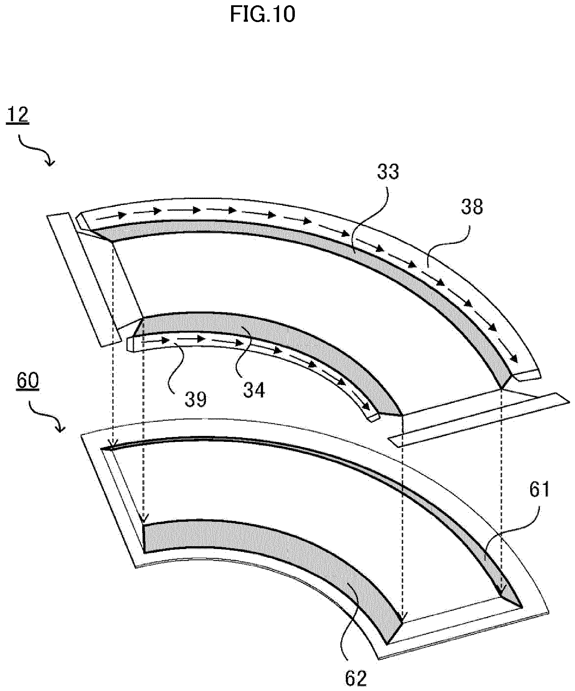

As illustrated in FIG. 10, the fiber preform 12 according to Embodiment 2 manufactured using the fiber preform precursor 11 in FIG. 1 is formed with a forming mold 60. The forming mold 60 has conical surfaces 61 and 62 as illustrated in FIG. 10. The outer taper portion 33 in the fiber preform precursor 11 is formed into a conical surface along the conical surface 61, and the inner taper portion 34 is formed into a conical surface along the conical surface 62. The outer taper portion 33 and the inner taper portion 34 are thus tapered after formed into the sandwich panel. The outer taper portion 33 and the inner taper portion 34 in the fiber preform precursor 11 illustrated in FIG. 1 are yet to be inclined and are flat.

A fiber fabric may be used for the base 21. Examples of the fiber include glass fiber, carbon fiber, and para-aramid fiber, as well as organic fiber such as polyester fiber. The fiber tows are stitched onto portions of the base 21 with water-soluble or water-insoluble fixing threads. The fixing threads may include upper threads and lower threads. As indicated by the broken lines in FIG. 1, the base 21 has multiple dashed outer slits 23 and multiple dashed inner slits 24 in the respective portions to be the outer taper portion 33 or the inner taper portion 34.

The fiber tows are formed from glass fiber, carbon fiber, or para-aramid fiber. The fiber tows may be formed from organic fiber such as polyester fiber.

The fiber tows fixed to the base 21 with water-soluble fixing threads 56 are herein referred to as first fiber tows 51, and the fiber tows fixed to the base 21 with water-insoluble fixing threads 57 are herein referred to as second fiber tows 52. A fixer 40 is also located across the first fiber tows 51 to partially fix the first fiber tows 51. The fixer 40 in the present embodiment includes a fiber tow and water-insoluble fixing threads. The fiber tow in the fixer 40 is referred to as a third fiber tow 53. In the present embodiment, areas of the base 21 in which the first fiber tows 51 are located are referred to as first areas. Areas of the base 21 other than the first areas in which the second fiber tows 52 are located are referred to as second areas.

The first fiber tows 51, the second fiber tows 52, and the third fiber tow 53 may all be formed from the same material. Instead, any two of the first fiber tows 51, the second fiber tows 52, and the third fiber tow 53 may be formed from the same material, or the first fiber tows 51, the second fiber tows 52, and the third fiber tow 53 may all be formed from different materials.

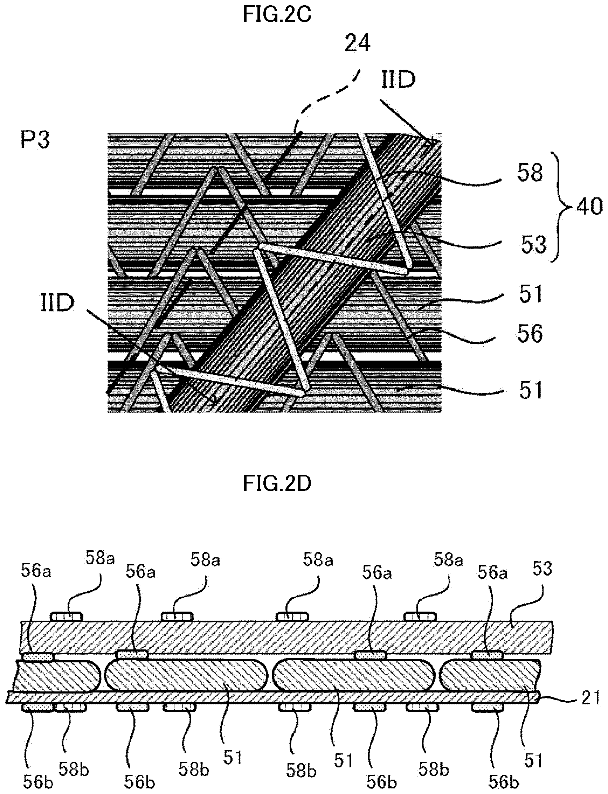

As illustrated in FIG. 2A, the first fiber tows 51 are fixed to the base 21 with the water-soluble fixing threads 56. More specifically, as illustrated in FIG. 2D, the first fiber tows 51 are stitched with a water-soluble upper thread 56a and a water-soluble lower thread 56b to be fixed to the base 21. The water-soluble fixing threads 56 are removable with water, or for example, by immersing the threads in water or spraying the threads with water. The water-soluble fixing threads 56 may be formed from a water-soluble material, such as vinylon.

As illustrated in FIG. 2B, the second fiber tows 52 are fixed to the base 21 with the water-insoluble fixing threads 57. As in the example in FIG. 2D, the second fiber tows 52 are also stitched onto the base 21 with a water-insoluble upper thread and a water-insoluble lower thread. Examples of the material for the water-insoluble fixing threads 57 include glass fiber, carbon fiber, and para-aramid fiber, as well as organic fiber such as polyester fiber or nylon fiber.

As illustrated in FIG. 2C, the third fiber tow 53 is located across the first fiber tows 51. The third fiber tow 53 is fixed to the base 21 with water-insoluble fixing threads 58. As illustrated in FIG. 2D, the third fiber tow 53 is also stitched onto the base 21 with a water-insoluble upper thread 58a and a water-insoluble lower thread 58b. Parts of the first fiber tows 51 on which the third fiber tow 53 is provided are thus fixed to the base 21. The water-insoluble fixing thread 58 may be formed from the same material as or a different material from the water-insoluble fixing threads 57 for fixing the first fiber tows 51.

In the fiber preform precursor 11 according to the present embodiment, the first fiber tows 51 are fixed to the base 21 with the water-soluble fixing threads 56 as illustrated in FIG. 2A in the outer taper portion 33 and the inner taper portion 34, and the third fiber tow 53 fixed with the water-insoluble fixing threads 58 is located across the first fiber tows 51 fixed with the water-soluble fixing threads 56 as illustrated in FIG. 2C. Thus, areas of the base 21 in which the outer taper portion 33 and the inner taper portion 34 are located correspond to the first areas. In contrast, the second fiber tows 52 are fixed to the base with the water-insoluble fixing threads 57 in portions of the base 21 other than the outer taper 33 and the inner taper 34, or more specifically, in the center portion 31, the outer flange portion 38, the inner flange portion 39, and the side portions 35 and 36. Thus, the center portion 31, the outer flange 38, the inner flange 39, and the side portions 35 and 36 in the base 21 correspond to the second areas.

As illustrated in FIG. 1, the third fiber tow 53 extends from the outer periphery 33a to the inner periphery 33b of the outer taper portion 33, or from the inner periphery 33b to the outer periphery 33a. The same applies to the inner taper portion 34. The third fiber tow 53 extends from the outer periphery 34a to the inner periphery 34b of the inner taper portion 34, or from the inner periphery 34b to the outer periphery 34a.

In FIG. 1, the third fiber tow 53 is continuous as a single third fiber tow 53 crossing the outer taper portion 33 and the inner taper portion 34 multiple times. In some embodiments of the present disclosure, however, multiple third fiber tows 53 may be prepared to each extend from the outer periphery 33a to the inner periphery 33b of the outer taper portion 33, or from the inner periphery 33b to the outer periphery 33a. The same applies to the inner taper portion 34.

The water-soluble fixing threads 56 is removable from the fiber preform precursor 11 through dissolution in water during manufacture of the fiber preform 12. Thus, parts of the first fiber tows 51 overlapping the third fiber tow 53 in the fiber preform 11 are fixed. The first fiber tows 51 are thus displaceable relative to one another, and the first areas in which the first fiber tows 51 are located are displaceable relative to the second areas in which the second fiber tows 52 are located, thus providing higher formability. The fiber preform can eliminate creating a cutout or a separate member for reducing wrinkles, and thus can avoid lowering the rigidity of the product. In the embodiments of the present disclosure, being displaceable relative to one another or relative to the second areas refers to being changeable in terms of angles, positions, or both.

For the outer taper portion 33 to be formed along the conical surface 61 of the forming mold 60 in the above structure, the outer flange portion 38 may be rotated in the circumferential direction of the forming mold 60, or in the direction indicated by the arrows in FIG. 10, for forming. Similarly, for the inner taper portion 34 to be formed along the conical surface 62 of the forming mold 60, the inner flange portion 39 may be rotated in the circumferential direction of the forming mold 60, or in the direction indicated by the arrows in FIG. 10, for forming. Thus, the outer flange portion 38 and the inner flange portion 39 in the fiber preform precursor 11 may be displaced in a direction opposite to the direction of the force applied in forming. More specifically, the outer flange portion 38 is rotated in the circumferential direction of a circle centered on the center O with a radius $R_o$ in forming. The outer flange portion 38 may thus be rotated, for placement, in the circumferential direction of the circle centered on the point O with the radius $R_o$, or in the direction opposite to the direction of the force applied in forming.

In particular, the outer flange portion 38 may be rotated, for placement, in the circumferential direction of the circle centered on the point O with the radius $R_o$ by a height H of the outer periphery 31a of the center portion 31 after forming. In this case, the length of a rotation by which the outer flange portion 38 is rotated in the circumferential direction may be the same as the height H of the outer periphery 31a of the center portion 31 after forming.

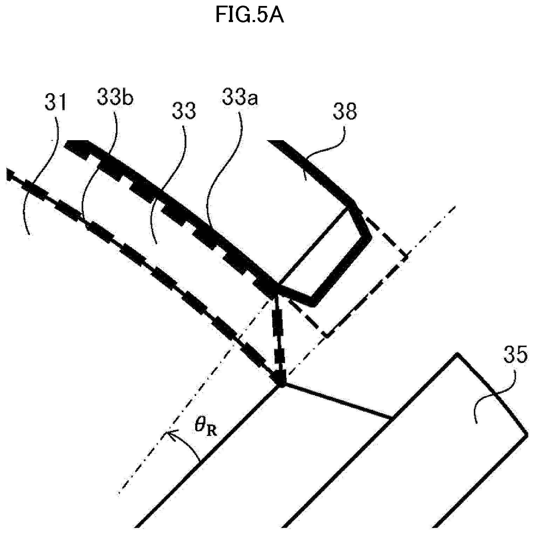

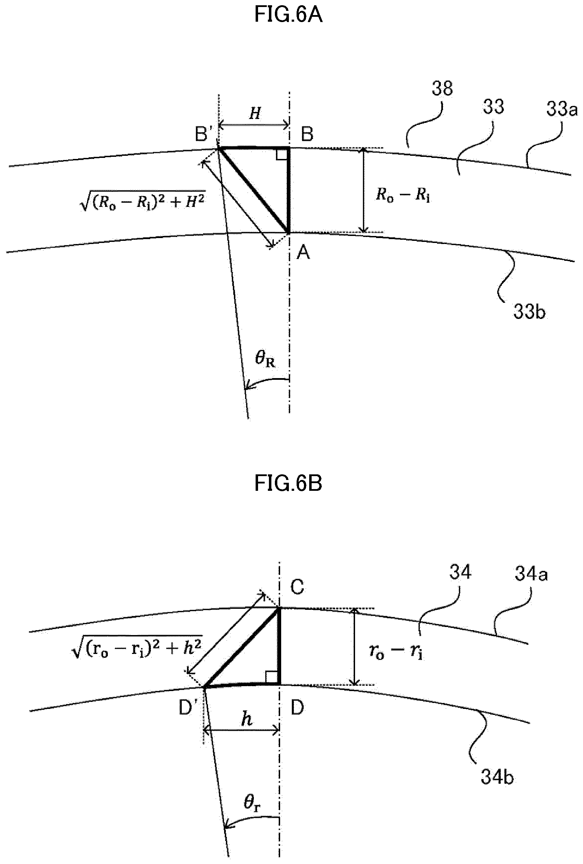

As illustrated in FIG. 5A, the amount by which the outer flange portion 38 is rotated may be defined by an angle $\theta_R$ determined by Formula 1.1. In the formula, $R_o$ is the diameter of the outer periphery 33a of the outer taper portion 33, and H is the height of the outer periphery 31a of the center portion 31 after forming. In FIG. 6A, BB' indicates the length of the rotation, and AB indicates the width of the outer taper portion. With $R_o$ greater than H, as illustrated in FIG. 6A, the length of the rotation extends in a tangential direction and is substantially at right angles to a line OA extending from the center O. The angle is thus defined as in Formula 1.1, and ABB' is substantially a right triangle.

$$\theta_R = \tan^{-1} \frac{H}{R_o} \qquad (1.1)$$

Similarly to the outer flange portion 38, the inner flange portion 39 may be rotated, for placement, by a height h of the inner periphery 3 1b of the center portion 31 after forming in the circumferential direction of a circle centered on the point O with a radius $r_i$. In this case, the length of a rotation by which the inner flange portion 39 is rotated in the circumferential direction may be the same as the height h of the inner periphery 31b of the center portion 31 after forming.

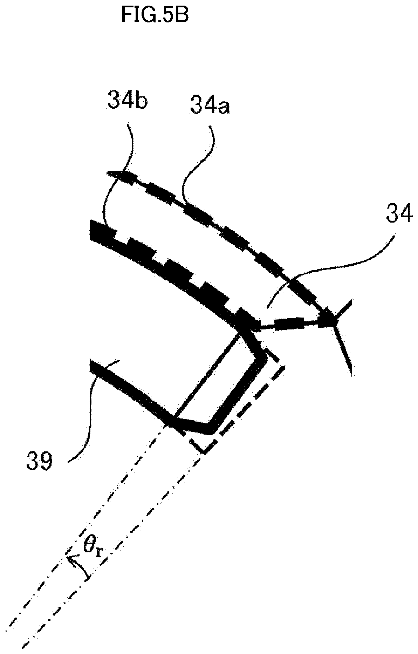

Similarly to the outer flange portion, as illustrated in FIG. 5B, the amount by which the inner flange portion 39 is rotated may be defined by an angle $\theta_r$ determined by Formula 1.2 using the diameter $r_o$ of the inner periphery 34b of the inner taper portion 34 and the height h of the inner periphery of the center portion 31 after forming. In FIG. 6B, D-D' indicates the rotation periphery, and C-D indicates the width of the inner taper portion. With the diameter $r_o$ greater than the height h, as illustrated in FIG. 6B, the rotation periphery extends in a tangential direction and is substantially at right angles to a line extending from the center O. The angle is thus defined as in Formula 1.2, and CDD' is substantially a right triangle.

$$\theta_r = \tan^{-1}\frac{h}{r_i}$$

$$(1.2)$$

In forming, the outer flange portion 38 and the inner flange portion 39 are rotated in the direction indicated by the arrows in FIG. 10, or rightward in FIG. 10, to be formed. The outer flange portion 38 is rotated by $\theta_R$, and the inner flange portion 39 is rotated by $\theta_r$.

In particular, when the outer flange portion 38 and the inner flange portion 39 are placed in the above manner, the outer flange portion 38 is rotated, in forming, by $-\theta_R$ along the periphery centered on the point O with the radius $R_o$. As illustrated in FIG. 6A, this causes B' to move to a position B on a line extending from the point O through a point A. When the inner flange portion 39 is rotated by $-\theta_r$ along the periphery centered on the point O with the radius r;, as illustrated in FIG. 6B, D' moves to a position D on a line extending from the point O through a point C. In this case, the distance between A and B' in the fiber preform precursor 11 before forming is

$$\sqrt{(R_o - R_i)^2 + H^2},$$

and the distance between C and D' is

$$\sqrt{(r_o - r_i)^2 + h^2}.$$

FIG. 7 schematically illustrates the height of the center portion 31 and the ridgelines of the outer taper portion 33 and the inner taper portion 34 after forming. As illustrated in FIG. 7, the outer periphery 31a of the center portion 31 after forming has the height H, and the inner periphery 3 1b of the center portion 31 after forming has the height h. As illustrated in FIG. 7, the distance between E' and F is the difference between the outer diameter $R_o$ and the inner diameter $R_i$ of the outer taper portion. The ridgeline EF of the outer taper portion thus has a length equal to the distance between A and B' in FIG. 6A. Similarly, the distance between J' and K is the difference between the outer diameter $r_o$ and the inner diameter $r_i$ of the inner taper portion. The ridgeline JK thus has a length equal to the distance between C and D' in FIG. 6B. With these relationships, the outer taper portion 33 and the inner taper portion 34 in the fiber preform 12 to be manufactured using the fiber preform precursor 11 can be formed appropriately with reduced wrinkles along the outer conical surface 61 and the inner conical surface 62 of the forming mold 60 for a partial-disk sandwich panel illustrated in FIG. 10.

The outer slits 23 and the inner slits 24 are located in the first areas on the base 21 in which the first fiber tows 51 are located. As illustrated in FIG. 1, the outer slits 23 are located in the areas on the base 21 in which the outer taper portion 33 and the inner taper portion 34 are located. The outer slits 23 and the inner slits 24 are in dashed lines.

As illustrated in FIG. 1, the outer slits 23 in the outer taper portion 33 each extend from the outer periphery 33a of the outer taper portion 33 to the inner periphery 33b of the outer taper portion 33. Similarly, the inner slits 24 in the inner taper portion 34 each extend from the outer periphery 34a of the inner taper portion 34 to the inner periphery 34b of the inner taper portion 34. The outer slits 23 and inner slits 24 may have no overlap with the fixer 40. For example, as illustrated in FIG. 2C, the outer slits 23 and inner slits 24 may be spaced from the fixer 40.

For example, when each slit is a single line, or in other words, when each slit has a single opening, the base 21 may be displaced during stitching of the first fiber tows 51, decreasing the formability or workability. In contrast, the outer slits 23 and the inner slits 24 in dashed lines as in the present embodiment can reduce wrinkles on the base 21 or displacement of the base 21 when the first fiber tows 51 are stitched onto the base 21.

As illustrated in FIG. 3, the outer slits 23 each include multiple linear openings 23a each having an opening width Lo and located linearly at a pitch Lp. The same applies to the inner slits 24. The length Lo of the openings 23a in the dashed outer slits 23 and the pitch Lp between the openings 23a illustrated in FIG.3 may be set as appropriate. However, the length Lo of the openings 23a and the pitch Lp between the openings 23a may be set to values that allow the areas between the openings 23a to be cut off in forming and allow the openings 23a adjacent to one another to be connected to one another. The areas between the adjacent slits can undergo shearing deformation in the circumferential direction. This allows the outer taper portion 33 and the inner taper portion 34 to be formed appropriately along the conical surfaces 61 and 62 of the forming mold 60.

The outer slits 23 and the inner slits 24 may extend in any direction in the base 21 and may satisfy the relationships described below.

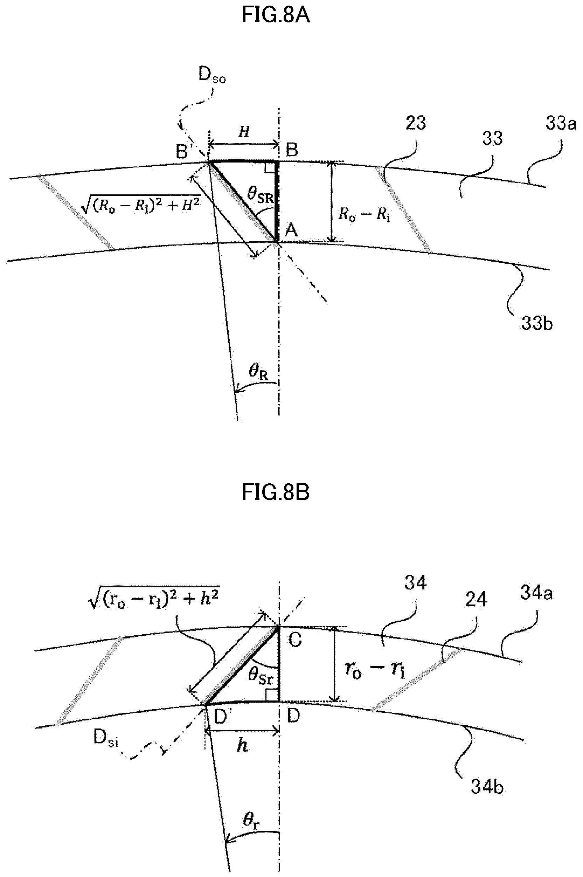

As illustrated in FIG. 8A, the outer slits 23 each extend from the outer periphery 33a of the outer taper portion 33 to the inner periphery 33b of the outer taper portion 33. As illustrated in FIG. 8A, an outer slit 23 is located on a line $D_{so}$. The line $D_{so}$ corresponding to the direction in which the outer slit 23 extends may form an angle $\theta_{SR}$ defined by Formula 1.3 with a line extending from the point O to an intersection at which the line $D_{so}$ intersects with the inner periphery 33b. In FIG. 8A, the outer slits 23 each extend from the outer periphery 33a to the inner periphery 33b. Thus, the intersection at which the line $D_{so}$ and the inner periphery 33b intersect with each other corresponds to the point A in FIG. 8A.

$$\theta_{SR} = \tan^{-1} \frac{H}{R_o - R_i} \qquad (1.3)$$

As illustrated in FIG. 8B, the inner slits 24 each extend from the outer periphery 34a of the inner taper portion 34 to the inner periphery 34b of the inner taper portion 34. As illustrated in FIG. 8B, an inner slit 24 is located on a line $D_{si}$. The line $D_{si}$ corresponding to the direction in which the inner slit 24 extends may form an angle $\theta_{Sr}$ defined by Formula 1.4 with a line extending from the point O to an intersection at which the line $D_{si}$ intersects with the outer periphery 34a. In FIG. 8B, the inner slits 24 extend from the inner periphery 34b to the outer periphery 34a. Thus, the intersection at which the line $D_{si}$ and the outer periphery 34a intersect with each other corresponds to the point C in FIG. 8B.

$$\theta_{Sr} = \tan^{-1} \frac{h}{r_o - r_i} \qquad (1.4)$$

With the outer slits 23 and the inner slits 24 located at the above angles, as illustrated in FIG. 8A, the outer slits 23 have the same length as the ridgeline EF of the conical surface of the outer taper portion 33 after forming illustrated in FIG. 7. Similarly, the inner slits 24 have the same length as the ridgeline JK. Thus, in forming of the fiber preform 12 to be manufactured using the fiber preform precursor 11, the outer taper portion 33 and the inner taper portion 34 can be formed along the conical surfaces without wrinkles through shear deformation of portions of the base 21 located between adjacent slits.

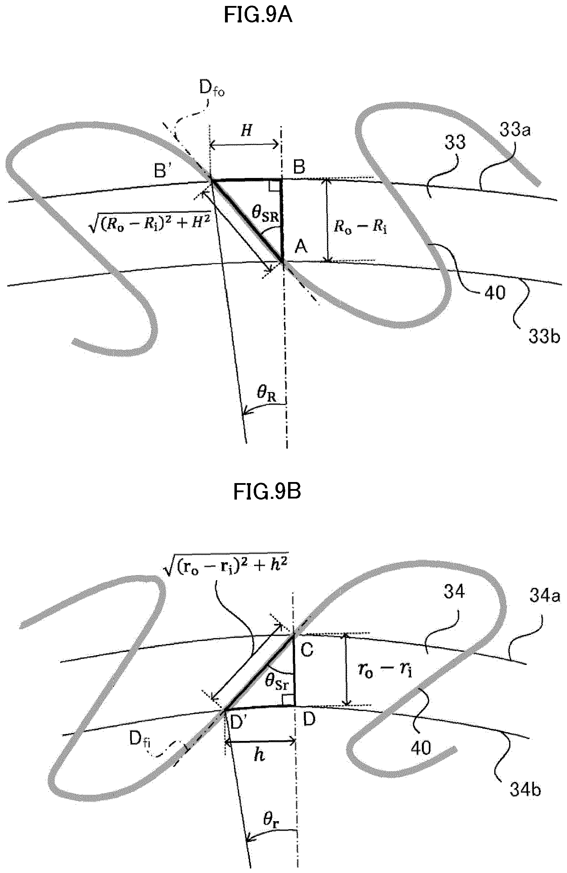

Additionally, the fixer 40 may be placed at an angle satisfying the conditions below in the outer taper portion 33. As illustrated in FIG. 9A, the fixer 40 is placed on a line $D_{fo}$ in the outer taper portion 33. The line $D_{fo}$ intersects with the inner periphery 33b of the outer taper portion 33 at an intersection. A line extending from the point O to the intersection and the line $D_{fo}$ may be in a direction $\theta_{SR}$ defined by Formula 1.5. In FIG. 9A, the intersection at which the line $D_{fo}$ intersects with the inner periphery 33b of the outer taper portion 33 corresponds to the point A.

$$\theta_{SR} = \tan^{-1} \frac{H}{R_o - R_i} \qquad (1.5)$$

Similarly, the fixer 40 may be placed at an angle satisfying the conditions below in the inner taper portion 34. As illustrated in FIG. 9B, the fixer 40 is placed on a line $D_{fi}$ in the inner taper 34. The line $D_{fi}$ intersects with the outer periphery 34a of the inner taper 34 at a point. A line extending from the point O to the point and the line $D_{fi}$ may be in a direction $\theta_{Sr}$ defined by Formula 1.6. In FIG. 9B, the point at which the line $D_{fo}$ intersects with the outer periphery 34a of the inner taper portion 34 corresponds to the point C.

$$\theta_{Sr} = \tan^{-1}\frac{h}{r_o - r_i} \qquad (1.6)$$

In the fixer 40 placed in the above manner, as illustrated in FIG. 9A, the fixer 40 in the outer taper portion 33 can have the same length as the ridgeline EF of the conical surface of the outer taper portion 33 after forming as illustrated in FIG. 7. Similarly, the fixer 40 in the inner taper portion 34 can have the same length as the ridgeline JK. Thus, the fixed first fiber tows 51 are displaceable relative to one another, and parts of the first fiber tows 51 restricted by the fixer 40 can be placed on the same ridgeline of the conical surface of the outer taper portion 33 after forming. This allows the outer taper portion 33 and the inner taper portion 34 to appropriately form into the conical surfaces.

Embodiment 2

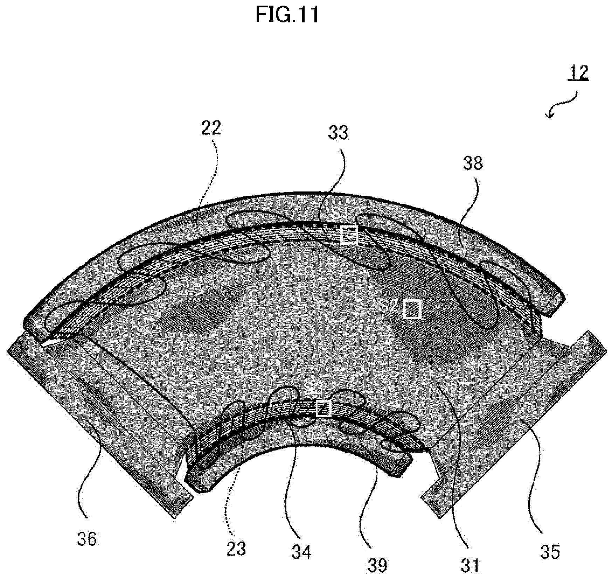

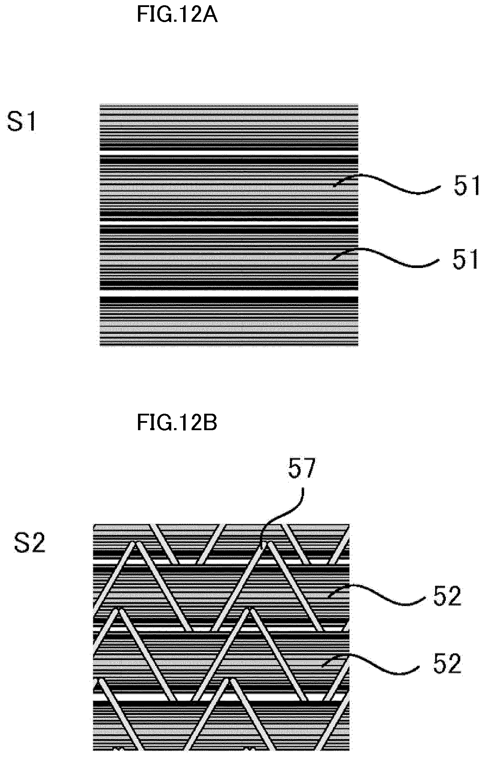

FIG. 11 illustrates a fiber preform 12 according to Embodiment 2. The fiber preform 12 according to the present embodiment is manufactured using the fiber preform precursor 11 according to Embodiment 1. FIGS. 12A to 12C are partially enlarged views of areas S1 to S3 in FIG. 11. Like reference signs denote features common with the features in Embodiment 1 and are not described in detail.

As illustrated in FIG. 11, in the fiber preform 12 according to the present embodiment, the portion of the base 21 including no fiber tow is cut off, unlike in the fiber preform precursor 11. More specifically, the base 21 remains in areas in which the center portion 31, the outer taper portion 33, the inner taper portion 34, the side portions 35 and 36, the outer flange portion 38, and the inner flange portion 39 are located.

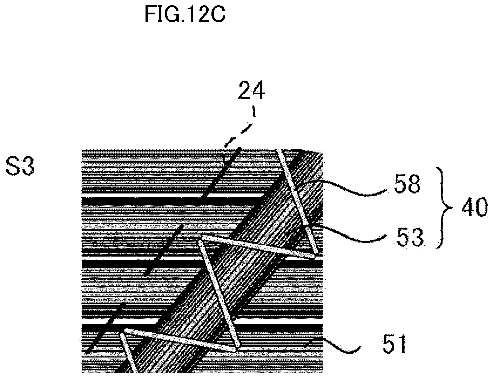

As illustrated in FIGS. 12A and 12C, the water-soluble fixing threads 56 fixing the first fiber tows 51 to the base 21 are removed in the outer taper portion 33 and the inner taper portion 34. Parts of the first fiber tows 51 are fixed to the base 21 with the fixer 40. In contrast, as illustrated in FIG. 12B, the second fiber tows 52 are fixed to the base 21 with the water-insoluble fixing threads 57 in the center portion 31. Similarly, the second fiber tows 52 are fixed to the base 21 with the water-insoluble fixing threads 57 in the outer taper portion 33, the inner taper portion 34, and the side portions 35 and 36.

The first fiber tows 51 in the outer taper portion 33 and the inner taper portion 34 are thus displaceable relative to one another. However, with parts of the first fiber tows 51 fixed with the fixer 40, the first fiber tows 51 can remain unseparated from the base 21. The fiber preform 12 can thus have higher formability. This structure is particularly effective in forming a fiber preform into a shape with a curved surface. The outer flange portion 38, the inner flange portion 39, the outer slits 23, the inner slits 24, and the fixer 40 in the present embodiment may have the features described in Embodiment 1. This allows the outer taper portion 33 and the inner taper portion 34 to appropriately form into conical surfaces.

Embodiment 3

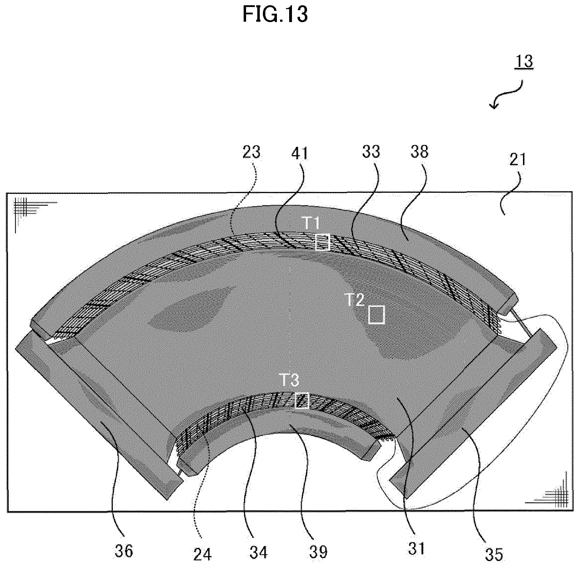

A fiber preform precursor 13 according to Embodiment 3 is described with reference to FIG. 13. The fiber preform precursor 13 according to the present embodiment is manufactured during manufacture of a fiber preform 14 according to Embodiment 4 described later. The fiber preform precursor 13 according to the present embodiment differs from Embodiments 1 and 2 as shown above in that a glue or an elastic adhesive is used as a fixer 41. Like reference signs denote features common with the features in Embodiment 1 and are not described in detail.

As in Embodiment 1, the fiber preform precursor 13 according to the present embodiment includes the base 21, the center portion 31, the outer taper portion 33, the inner taper portion 34, the side portions 35 and 36, the outer flange portion 38, and the inner flange portion 39. The first fiber tows 51 are fixed with the water-soluble fixing threads 56 in the outer taper portion 33 and the inner taper portion 34. The second fiber tows 52 are fixed with the water-insoluble fixing threads 57 in the center portion 31, the side portions 35 and 36, the outer flange portion 38, and the inner flange portion 39. The fiber preform precursor 13 also has the outer slits 23 and the inner slits 24 as in Embodiment 1.

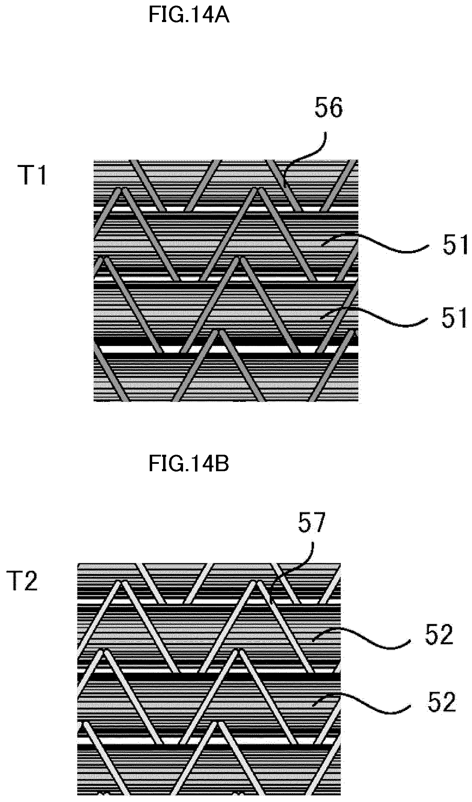

More specifically, as illustrated in FIG. 14A, the first fiber tows 51 are fixed to the base 21 with the water-soluble fixing threads 56. As illustrated in FIG. 14B, the second fiber tows 52 are fixed to the base 21 with the water-insoluble fixing threads 57.

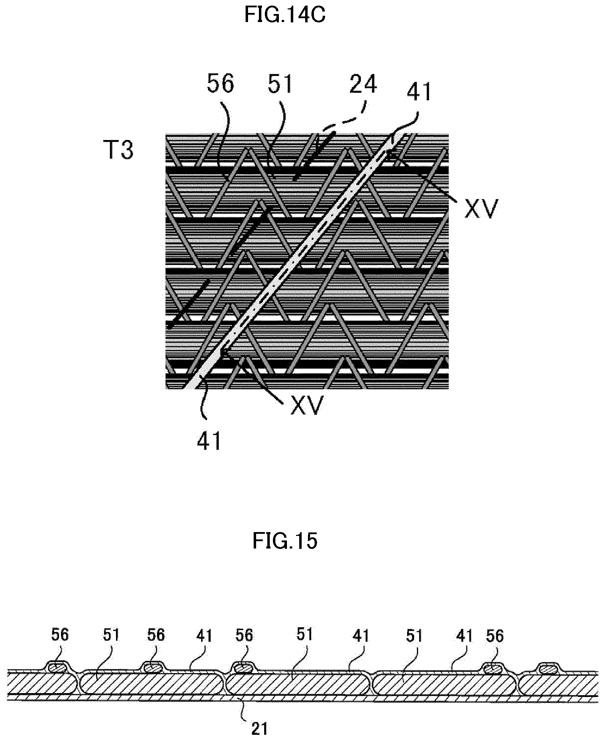

As illustrated in FIG. 13, the fixer 41 extends from the outer periphery 33a to the inner periphery 33b of the outer taper portion 33, or from the inner periphery 33b to the outer periphery 33a. The same applies to the inner taper portion 34. The fixer 41 extends from the outer periphery 34a to the inner periphery 34b of the inner taper portion 34, or from the inner periphery 34b to the outer periphery 34a. As illustrated in FIG. 14C, the fixer 41 is located across the first fiber tows 51. Parts of the first fiber tows 51 on which the fixer 41 is provided on are fixed to the base 21. The fixer 41 in the present embodiment is, for example, a glue or an elastic adhesive having flexibility, such as a silicone resin.

FIG. 15 is a cross-sectional view taken along line XV-XV in FIG. 14C. As illustrated in FIG. 15, the fixer 41 is also located between adjacent first fiber tows 51 to fix the first fiber tows 51 to the base 21.

When the water-soluble fixing threads 56 are removed, the fixer 41 restricts the first fiber tows 51 in the outer taper portion 33 and the inner taper portion 34, allowing the first fiber tows 51 to remain unseparated from the base 21.

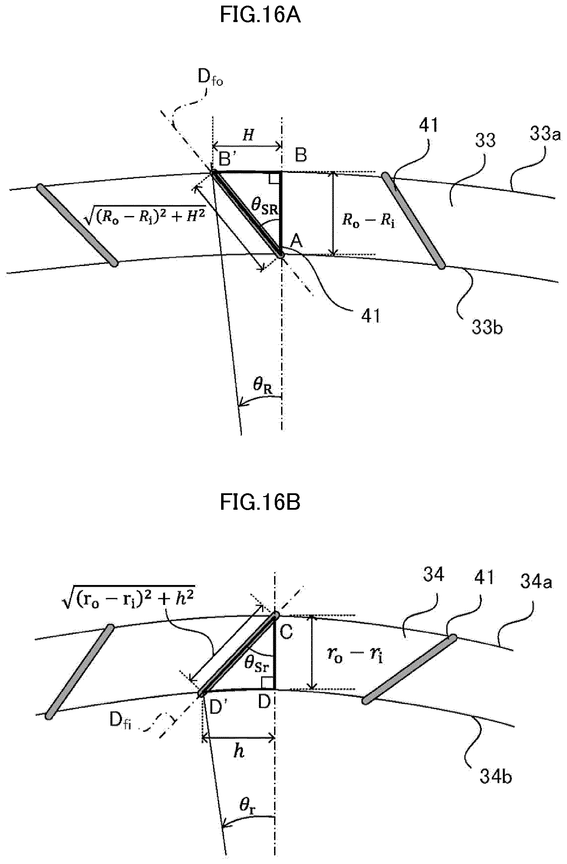

The fixer 41 in the present embodiment may be placed as appropriate in the outer taper portion 33 and the inner taper portion 34. The fixer 41 may be placed at an angle satisfying the conditions below in the outer taper 33. As illustrated in FIG. 16A, the fixer 41 is placed on the line $D_{fo}$ in the outer taper portion 33. The line $D_{fo}$ intersects with the inner periphery 33b of the outer taper portion 33 at an intersection. The intersection corresponds to the point A in FIG. 16A. The line extending from the point O to the intersection and the line $D_{fo}$ may be in the direction $\theta_{SR}$ defined by Formula 1.5.

$$\theta_{SR} = \tan^{-1}\frac{H}{R_o - R_i} \qquad (1.5)$$

Similarly, the fixer 41 may be placed at an angle satisfying the conditions below in the inner taper portion 34. As illustrated in FIG. 16B, the fixer 41 is placed on the line $D_{fi}$ in the inner taper portion 34. The line $D_{fi}$ intersects with the outer periphery 34a of the inner taper portion 34 at an intersection. The intersection corresponds to the point C in FIG. 16B. The line extending from the point O to the intersection and the line $D_{fi}$ may be in the direction $\theta_{Sr}$ defined by Formula 1.6.

$$\theta_{Sr} = \tan^{-1}\frac{h}{r_o - r_i} \qquad (1.6)$$

As illustrated in FIG. 16A, the fixer 41 placed in the above manner in the outer taper portion 33 can have the same length as the ridgeline EF of the conical surface of the outer taper portion 33 after forming, with the length of the fixer 41 in the outer taper portion 33 illustrated in FIG. 7. The same applies to the fixer 41 in the inner taper portion 34. This allows, in addition to the fixed first fiber tows 51 to be displaceable relative to one another, the parts of the first fiber tows 51 restricted by the fixer 41 to be placed on the same ridgeline of the conical surface of the outer taper 33 after forming. This thus allows the outer taper portion 33 and the inner taper portion 34 to appropriately form into conical surfaces.

In this case, the outer flange 38 and the inner flange 39 may have the same features as in Embodiment 1. The outer slits 23 and the inner slits 24 may also have the same features as in Embodiment 1.

Embodiment 4

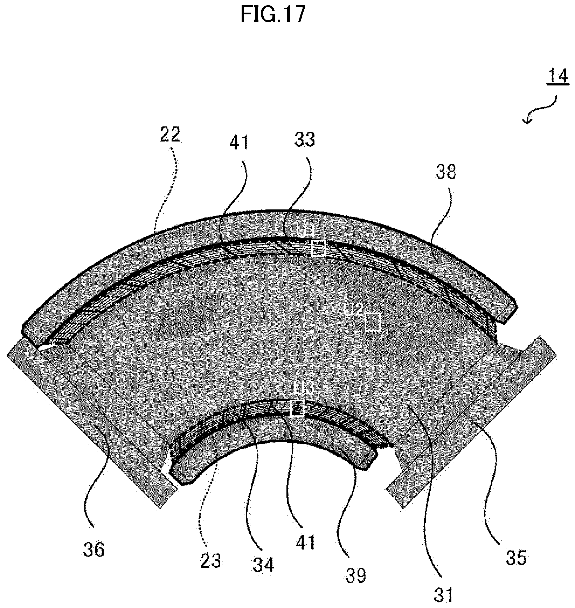

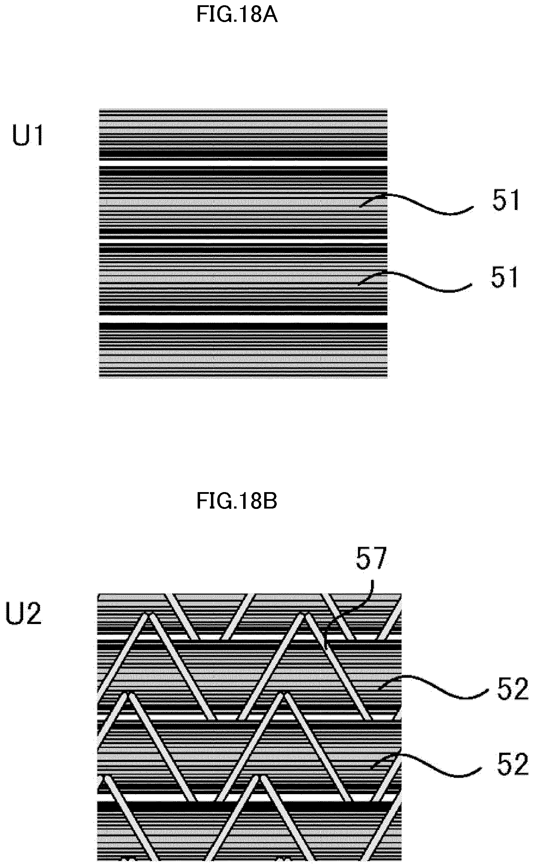

FIG. 17 illustrates a fiber preform 14 according to Embodiment 4. The fiber preform 14 according to the present embodiment is manufactured using the fiber preform precursor 13 according to Embodiment 3. FIGS. 18A to 18C are partial enlarged views of areas U1 to U3 in FIG. 17. Like reference signs denote features common with the features in the above embodiments and are not described in detail.

As illustrated in FIG. 17, a portion of the base 21 including no fiber tow is cut off in the present embodiment.

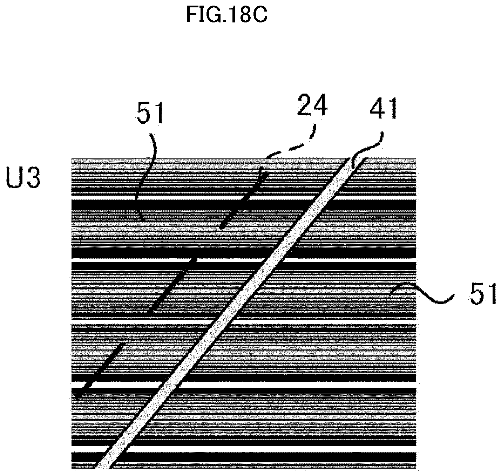

As illustrated in FIG. 18B, for example, the second fiber tows 52 in the center portion 31 are fixed with the water-insoluble fixing threads 57. As illustrated in FIGS. 18A and 18C, the water-soluble fixing threads 56 fixing the first fiber tows 51 to the base 21 are removed in the outer taper portion 33 and the inner taper portion 34. As schematically illustrated in FIG. 15, the fixer 41 may also be located on the water-soluble fixing threads 56. Although the water-soluble fixing threads 56 are removed with water during manufacture of the fiber preform 14, the water-soluble fixing threads 56 located under the fixer 41 may be left in the fiber preform 14.

With this structure, the first fiber tows 51 are displaceable relative to one another in the outer taper portion 33 and the inner taper portion 34. However, with parts of the first fiber tows 51 fixed with the fixer 41, the first fiber tows 51 can remain unseparated from the base 21. The fiber preform 14 can thus have higher formability. This structure is particularly effective in forming a fiber preform into a shape with a curved surface. The outer flange portion 38, the inner flange portion 39, the outer slits 23, the inner slits 24, and the fixer 41 in the present embodiment may have the same features as in Embodiments 1 and 3. This allows the outer taper portion 33 and the inner taper portion 34 to form into the conical surfaces more appropriately.

Embodiment 5

A method for manufacturing the fiber preform 12 according to Embodiment 5 is described with reference to the drawings.

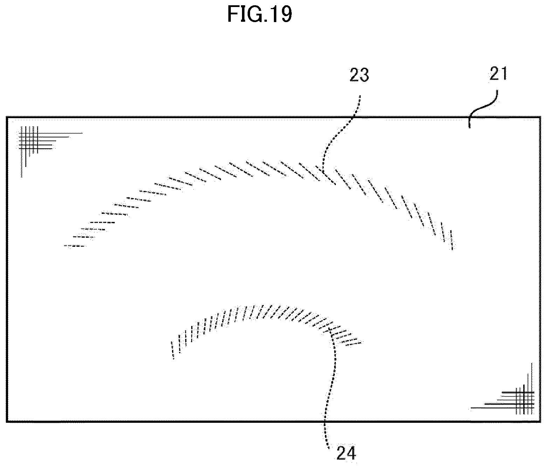

As illustrated in FIG. 19, the dashed outer slits 23 are formed in an area on the base 21 in which the outer taper portion 33 is to be located. Similarly, the inner slits 24 are formed in the base 21 in an area in which the inner taper portion 34 is to be located.

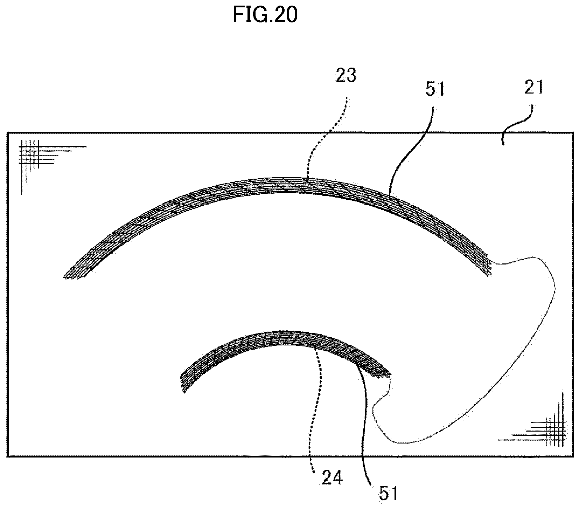

Subsequently, as illustrated in FIG. 20, the first fiber tows 51 are stitched onto the area in which the outer taper portion 33 is to be located with the water-soluble fixing threads 56 using a known automatic sewing machine or a known embroidering machine. Similarly, the first fiber tows 51 are stitched onto the area in which the inner taper portion 34 is to be located with the water-soluble fixing threads 56.

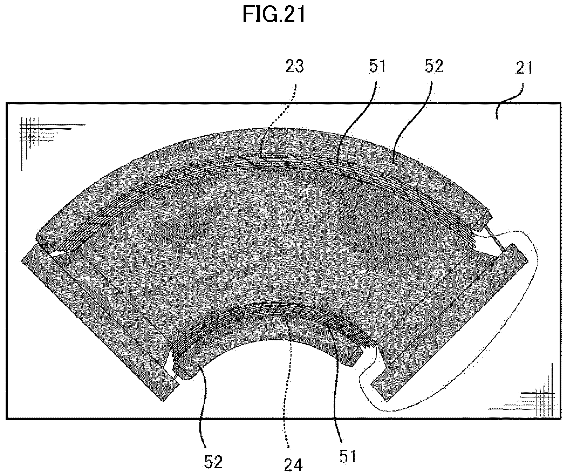

The second fiber tows 52 are then stitched onto areas of the base 21 without the first fiber tows 51 with the water-insoluble fixing threads 57 using a known automatic sewing machine or a known embroidering machine. In the present embodiment, as illustrated in FIG. 21, the second fiber tows 52 are stitched onto the areas in which the center portion 31, the side portions 35 and 36, the outer flange portion 38, and the inner flange portion 39 are to be located.

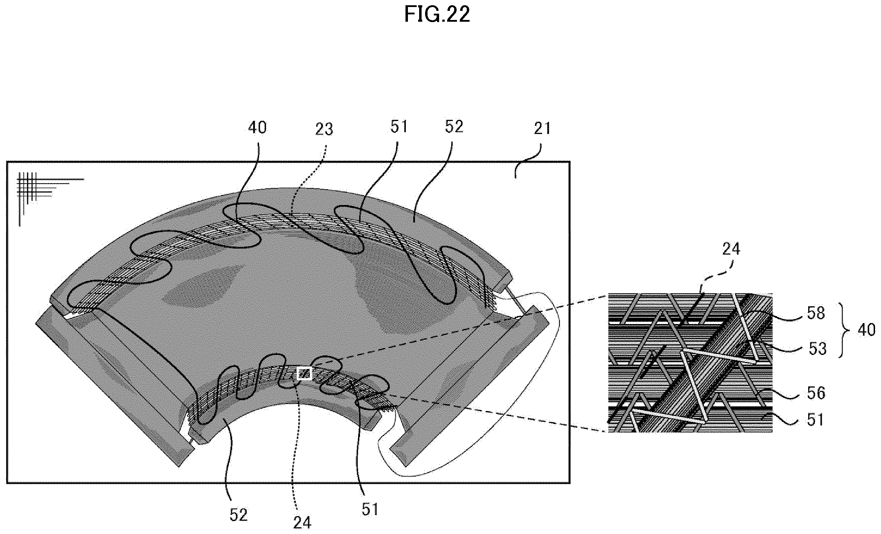

The fixer 40 is then placed across the first fiber tows 51 as illustrated in FIG. 22. More specifically, the third fiber tow 53 is stitched onto the first fiber tows 51 with the water-insoluble fixing thread 58 using a known automatic sewing machine or a known embroidering machine.

The fiber preform precursor 11 is thus manufactured. The outer flange portion 38, the inner flange portion 39, the outer slits 23, the inner slits 24, or the fixer 40 may be formed to satisfy the conditions described in Embodiment 1.

The water-soluble fixing threads in the fiber preform precursor 11 are then removed with water. More specifically, the fiber preform precursor 11 is immersed in water to dissolve the water-soluble fixing threads. The fiber preform precursor 11 may be sprayed with water to dissolve and remove the water-soluble fixing threads. Unnecessary portions of the base 21 may be cut off and removed.

With the above processes, the fiber preform 12 can be manufactured.

With the method for manufacturing a fiber preform according to the present disclosure, parts of the fiber tows remain unseparated from the base and fixed to allow displacement of the fiber tows relative to one another. The fiber preform can thus have higher formability. Additionally, with the manufacturing method according to the present disclosure, the first fiber tows 51 are fixed with water-soluble fixing threads that are easily removable with water. The fiber preform with higher formability can thus be manufactured. Additionally, this method can eliminate creating a cutout in the fiber tows for higher formability and can avoid lowering the rigidity of the formed product.

Embodiment 6

A method for manufacturing the fiber preform 14 according to Embodiment 6 is described with reference to the drawings.

The processes of forming the outer slits 23 and the inner slits 24, stitching the first fiber tows 51, and stitching the second fiber tows 52 are performed in the same manner as in Embodiment 5. The outer flange portion 38, the inner flange portion 39, the outer slits 23, the inner slits 24, or the fixer 41 may be formed to satisfy the conditions described in Embodiment 1 or 3 in the present embodiment as well.

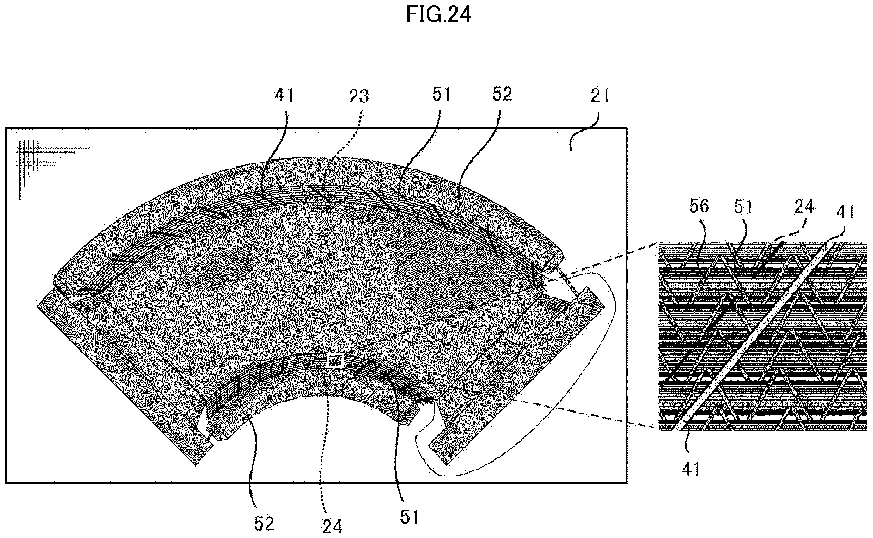

As illustrated in FIG. 24, the fixer 41 is then placed across the first fiber tows 51. More specifically, the fixer 41 is applied to the first fiber tows 51 fixed with the water-soluble fixing threads 56 using an applicator such as a dispenser to bond the first fiber tows 51 to the base 21. When a material to be cured, such as an elastic adhesive, is used for the fixer 41, the process of curing is performed after applying.

The fiber preform precursor 13 is thus manufactured.

The water-soluble fixing threads 56 in the fiber preform precursor 13 are then removed with water. More specifically, the fiber preform precursor 13 is immersed in water to dissolve the water-soluble fixing threads 56. The fiber preform precursor 13 may be sprayed with water to dissolve and remove the water-soluble fixing threads 56. The water-soluble fixing threads 56 under the fixer 41 may remain undissolved. Unnecessary portions of the base 21 may be cut off as appropriate.

With the above processes, the fiber preform 14 can be manufactured.

With the method for manufacturing a fiber preform according to embodiments of the present disclosure, parts of the fiber tows remain unseparated from the base and fixed to allow displacement of the fiber tows relative to one another. The fiber preform can thus have higher formability. Additionally, with the manufacturing method according to the present embodiment, the first fiber tows 51 are fixed with water-soluble fixing threads that are easily removable with water. The fiber preform with higher formability can thus be manufactured. Additionally, this method can eliminate creating a cutout in the fiber tows for higher formability and can avoid lowering the rigidity of the formed product.

The present disclosure is not limited to the above embodiments. For example, in Embodiments 1 and 3, the outer flange portion 38, the inner flange portion 39, the outer slits 23, the inner slits 24, and the fixers 40 and 41 satisfy the conditions described with the formulas. In some embodiments of the present disclosure, all the conditions may not be satisfied, and any one of the conditions alone may be satisfied.

In the above embodiments, the fiber preform precursor and the fiber preform for a partial-disk sandwich panel with a central angle of 90° are illustrated. However, the present disclosure is not limited to the above structure. For example, the central angle or the shape may be changed. Either the outer taper portion 33 or the inner taper portion 34, rather than both, may be included. For example, the fiber preform precursor or the fiber preform to form into a truncated cone may simply include the outer taper portion 33. The features of the above embodiments may be combined as appropriate.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

Reference Signs List

| | |
|---|---|
| 11, 13 | Fiber preform precursor |
| 12, 14 | Fiber preform |
| 21 | Base |
| 23 | Outer slit |
| 24 | Inner slit |
| 31 | Center portion |
| 33 | Outer taper portion |
| 34 | Inner taper portion |
| 35, 36 | Side portion |
| 38 | Outer flange portion |
| 39 | Inner flange portion |
| 40, 41 | Fixer |
| 51 | First fiber tow |
| 52 | Second fiber tow |
| 53 | Third fiber tow |
| 56 | Water-soluble fixing thread |
| 57, 58 | Water-insoluble fixing thread |
| 60 | Forming mold |
| 61, 62 | Conical surface |

**Claims**

1. A fiber preform, comprising:

    first fiber tows located in a first area on a base;
    a second fiber tow located in a second area on the base other than the first area, the second fiber tow being stitched onto the base with a water-insoluble fixing thread; and
    a fixer located across the first fiber tows to fix parts of the first fiber tows to the base, wherein
    the fixer is a third fiber tow stitched onto the base with a water-insoluble fixing thread, or the fixer is a glue or an elastic adhesive,
    the first fiber tows are displaceable relative to one another, and
    the first area is displaceable relative to the second area.

2. The fiber preform according to claim 1, further comprising:

    an outer taper portion to be formed into a conical surface, wherein
    the outer taper portion is located in the first area.

3. The fiber preform according to claim 2, further comprising:

    a center portion located along an inner periphery of the outer taper portion; and
    an outer flange portion located along an outer periphery of the outer taper portion, wherein
    the outer taper portion is to be formed into the conical surface by rotating the outer flange portion in a circumferential direction to be placed along a mold, and

the outer flange portion is rotated in a direction opposite to a direction in which the outer flange portion is to be rotated in forming, by a length equal to a height of an outer periphery of the center portion after forming.

4. The fiber preform according to claim 2 or 3, wherein

the outer taper portion has an outer periphery centered on a point O with an outer diameter $R_o$ and an inner periphery centered on the point O with an inner diameter $R_i$,

the fiber preform further comprises a center portion located along the inner periphery of the outer taper portion, and the center portion has a height H at its outer periphery after forming, and

the base has a dashed slit in an area in which the outer taper portion is located, the slit extends on a line $D_{so}$ from the outer periphery of the outer taper portion to the inner periphery of the outer taper portion, and the line $D_{so}$ forms, with a line extending from the center O to a point at which the line $D_{so}$ intersects with the inner periphery of the outer taper portion, an angle $\theta_{SR}$ defined by Formula 1.3:

$$\theta_{SR} = \tan^{-1}\frac{H}{R_o - R_i} \qquad (1.3)$$

5. The fiber preform according to any one of claims 2 to 4, wherein

the outer taper portion has an outer periphery centered on a point O with an outer diameter $R_o$ and an inner periphery centered on the point O with an inner diameter $R_i$,

the fiber preform further comprises a center portion located along the inner periphery of the outer taper portion, and the center portion has a height H at its outer periphery after forming, and

the fixer extends on a line $D_{fo}$ from the outer periphery of the outer taper portion to the inner periphery of the outer taper portion, and the line $D_{fo}$ forms, with a line extending from the center O to a point at which the line $D_{fo}$ intersects with the inner periphery of the outer taper portion, an angle $\theta_{SR}$ defined by Formula 1.5:

$$\theta_{SR} = \tan^{-1}\frac{H}{R_o - R_i} \qquad (1.5)$$

6. The fiber preform according to any one of claims 1 to 5, further comprising:

an inner taper portion to be formed into a conical surface, wherein

the inner taper portion is located in the first area.

7. The fiber preform according to claim 6, further comprising:

a center portion located along an outer periphery of the inner taper portion; and

an inner flange portion located along an inner periphery of the inner taper portion, wherein

the inner taper portion is to be placed along a mold by rotating the inner flange in a circumferential direction, and

the inner flange portion is rotated in a direction opposite to a direction in which the inner flange portion is to be rotated in forming by a length equal to a height h of an inner periphery of the center portion after forming.

8. The fiber preform according to claim 6 or 7, wherein

the inner taper portion has an outer periphery centered on a point O with an outer diameter $r_o$ and an inner periphery centered on the point O with an inner diameter r;,

the fiber preform further comprises a center portion located along the outer periphery of the inner taper portion, and the center portion has a height h at its inner periphery inner taper portion after forming, and

the base has a dashed slit in an area in which the inner taper portion is located, the slit extends on a line $D_{si}$ from the outer periphery of the inner taper portion to the inner periphery of the inner taper portion, and the line $D_{si}$ forms, with a line extending from the center O to a point at which the line $D_{si}$ intersects with the outer periphery of the inner taper portion, an angle $\theta_{Sr}$ defined by Formula 1.4:

$$\theta_{\mathrm{Sr}} = \tan^{-1}\frac{h}{r_o - r_i} \qquad (1.4)$$

9. The fiber preform according to any one of claims 6 to 8, wherein

the inner taper portion has an outer periphery centered on a point O with an outer diameter $r_o$ and an inner periphery centered on the point O with an inner diameter $r_i$,
the fiber preform further comprises a center portion located along the outer periphery of the inner taper portion, and the center portion has a height h at its inner periphery after forming, and
the fixer extends on a line $D_{fi}$ from the outer periphery of the inner taper portion to the inner periphery of the inner taper portion, and the line $D_{fi}$ forms, with a line extending from the center O to a point at which the line $D_{fi}$ intersects with the outer periphery of the inner taper portion, an angle $\theta_{Sr}$ defined by Formula 1.6:

$$\theta_{\mathrm{Sr}} = \tan^{-1}\frac{h}{r_o - r_i} \qquad (1.6)$$

10. The fiber preform according to any one of claims 1 to 9, wherein

the base has a dashed slit in the first area,
the slit has a plurality of openings arranged linearly, and
the portions of the base between the plurality of openings adjacent to each other are cut through shear deformation of the base in forming to connect the plurality of openings with each other.

11. A fiber preform precursor for manufacturing the fiber preform according to any one of claims 1 to 10, wherein the first fiber tows are stitched onto the base with a water-soluble fixing thread.

12. A method for manufacturing a fiber preform, comprising:

manufacturing a fiber preform precursor, the manufacturing including

stitching first fiber tows onto a first area of a base with a water-soluble fixing thread,
stitching a second fiber tow onto a second area of the base other than the first area with a water-insoluble fixing thread, and
placing a fixer across the first fiber tows to fix parts of the first fiber tows to the base; and

dissolving the water-soluble fixing thread in the fiber preform precursor with water to remove the water-soluble fixing thread, wherein
the fixer is a third fiber tow stitched onto the base with a water-insoluble fixing thread, or the fixer is a glue or an elastic adhesive,
the first fiber tows are displaceable relative to one another, and
the first area is displaceable relative to the second area.

FIG.1

FIG.2A

56

P1

51

51

FIG.2B

57

P2

52

52

## FIG.2C

## FIG.2D

FIG.3

FIG.4

FIG.5A

FIG.5B

## FIG.6A

## FIG.6B

FIG.7

FIG.8A

FIG.8B

## FIG.9A

## FIG.9B

FIG.10

FIG.11

FIG.12A

S1

51

51

FIG.12B

S2

57

52

52

FIG.12C

FIG.13

FIG.14A

FIG.14B

FIG.14C

FIG.15

## FIG.16A

## FIG.16B

FIG.17

FIG.18A

U1

51

51

FIG.18B

57

U2

52

52

FIG.18C

FIG.19

FIG.20

FIG.21

FIG.22

EP 4 488 021 A1

# FIG.23

EP 4 488 021 A1

# FIG.24

EP 4 488 021 A1

FIG.25

SEALANT
(OUTER PERIPHERY OF
BAGGING FILM)                    112

                                          132

LIQUID RESIN                                        VACCUMED

39    34   12        121              38
              31              33    131

## INTERNATIONAL SEARCH REPORT

International application No.

**PCT/JP2022/009552**

### A. CLASSIFICATION OF SUBJECT MATTER

**B29B 11/16**(2006.01)i; **B29B 15/08**(2006.01)i; **B32B 5/06**(2006.01)i; **B32B 5/26**(2006.01)i; **B29C 70/10**(2006.01)i
FI: B29B11/16; B29B15/08; B29C70/10; B32B5/06 Z; B32B5/26

According to International Patent Classification (IPC) or to both national classification and IPC

### B. FIELDS SEARCHED

Minimum documentation searched (classification system followed by classification symbols)

B29B11/16; B29B15/08; B32B5/00-5/32; B29C70/10; C08J5/04-5/10; C08J5/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2009-502547 A (AIRBUS DEUTSCHLAND GMBH) 29 January 2009 (2009-01-29) entire text, all drawings | 1-12 |
| A | JP 2004-529786 A (EADS DEUTSCHLAND GMBH) 30 September 2004 (2004-09-30) entire text, all drawings | 1-12 |
| A | JP 2009-503274 A (AIRBUS DEUTSCHLAND GMBH) 29 January 2009 (2009-01-29) entire text, all drawings | 1-12 |
| A | JP 2017-159652 A (TORAY INDUSTRIES) 14 September 2017 (2017-09-14) entire text, all drawings | 1-12 |
| A | JP 2009-502548 A (AIRBUS DEUTSCHLAND GMBH) 29 January 2009 (2009-01-29) entire text, all drawings | 1-12 |
| A | US 2013/0142988 A1 (GRELIN, Herve) 06 June 2013 (2013-06-06) claims, examples, figures | 1-12 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 11 May 2022 | 24 May 2022 |

| Name and mailing address of the ISA/JP | Authorized officer |
|---|---|
| Japan Patent Office (ISA/JP)<br>3-4-3 Kasumigaseki, Chiyoda-ku, Tokyo 100-8915<br>Japan | |
| | Telephone No. |

Form PCT/ISA/210 (second sheet) (January 2015)

Form PCT/ISA/210 (patent family annex) (January 2015)

<div align="center"><b>INTERNATIONAL SEARCH REPORT</b><br><b>Information on patent family members</b></div>

| International application No. |
| --- |
| **PCT/JP2022/009552** |

| Patent document cited in search report | | | Publication date (day/month/year) | Patent family member(s) | | | Publication date (day/month/year) |
| --- | --- | --- | --- | --- | --- | --- | --- |
| JP | 2009-502547 | A | 29 January 2009 | US | 2009/0050259 | A1 | |
| | | | | claims, examples, figures | | | |
| | | | | WO | 2007/010049 | A1 | |
| | | | | EP | 1907195 | A1 | |
| JP | 2004-529786 | A | 30 September 2004 | US | 2004/0074589 | A1 | |
| | | | | claims, examples, figures | | | |
| | | | | WO | 2002/045932 | A1 | |
| | | | | EP | 1339534 | A1 | |
| JP | 2009-503274 | A | 29 January 2009 | US | 2009/0096119 | A1 | |
| | | | | claims, examples, figures | | | |
| | | | | WO | 2007/010051 | A1 | |
| | | | | EP | 1915250 | A1 | |
| JP | 2017-159652 | A | 14 September 2017 | (Family: none) | | | |
| JP | 2009-502548 | A | 29 January 2009 | US | 2010/0126652 | A1 | |
| | | | | claims, examples, figures | | | |
| | | | | WO | 2007/010052 | A1 | |
| | | | | EP | 1915244 | A1 | |
| US | 2013/0142988 | A1 | 06 June 2013 | EP | 2599614 | A1 | |

**EP 4 488 021 A1**

REFERENCES CITED IN THE DESCRIPTION

**Patent documents cited in the description**

- JP 2014100911 A